# EUROPEAN PATENT APPLICATION

(11) **EP 3 926 818 A1**
(43) Date of publication of application: **22.12.2021**
(21) Application number: 20784206.3
(22) Date of filing: 27.03.2020
(51) Int. Cl.: H02S 10/10, G06Q 10/04, G06N 3/04, G06Q 50/06

(54) **POWER GENERATION AMOUNT PREDICTION DEVICE, POWER GENERATION AMOUNT PREDICTION METHOD, AND PROGRAM**

(30) Priority: 29.03.2019 JP 2019067230
(71) Applicant: Mitsubishi Heavy Industries, Ltd., Tokyo 100-8332 (JP)
(72) Inventor: KAWAKAMI Reiko, Tokyo 100-8332 (JP); WAKASUGI Kazuyuki, Tokyo 100-8332 (JP)
(74) Representative: Studio Torta S.p.A.
(86) International application number: PCT/JP2020/014234
(87) International publication number: WO 2020/203854

(57) **Abstract**

One aspect of the present invention is a power generation amount prediction device comprising: a storage unit that stores a model configured using machine learning involving the use of explanatory variables including at least the weather prediction information of a mesh including a prediction point and a plurality of surrounding meshes, and an objective variable corresponding to the amount of power generated by natural energy; and a prediction unit that inputs, into the model, the weather prediction information of the prediction time of at least the mesh including the prediction point and the plurality of surrounding meshes, and finds a predicted value of the power generation amount at the prediction point as an output from the model.

## Description

### Technical Field

The present invention relates to a power generation amount prediction device, a power generation amount prediction method, and a program.

Priority is claimed on Japanese Patent Application No. 2019-067230, filed March 29, 2019, the content of which is incorporated herein by reference.

### Background Art

The amount of power generated by solar power generation is determined in a complex manner from the solar radiation amount, temperature, and the like. Since it is difficult to predict the power generation amount by constructing a physical model based on such information, there is a method of predicting the power generation amount by using a neural network using a pixel image of the sky regularly observed at a fixed point as an explanatory variable (PTL 1).

However, since clouds move at a high speed of about 10 km/h in fine weather and about 60 km/h in typhoons, local sky observation makes it difficult to predict the power generation amount after a few hours.

### Citation List

### Patent Literature

[PTL 1] Japanese Unexamined Patent Application Publication No. 2017-200360.

### Summary of Invention

### Technical Problem

The present invention has been made in consideration of the above circumstances, and an object of the present invention is to provide a power generation amount prediction device, a power generation amount prediction method, and a program capable of accurately predicting the power generation amount in the long term.

### Solution to Problem

In order to solve the above problem, one aspect of the present invention is a power generation amount prediction device including: a storage unit that stores a model constructed by machine learning using explanatory variables including at least weather prediction information on each of a mesh including a prediction point and a plurality of surrounding meshes, and objective variables corresponding to a power generation amount from natural energy; and a prediction unit that inputs, into the model, at least weather prediction information at a prediction time on each of the mesh including the prediction point and the plurality of surrounding meshes, and obtains a predicted value of a power generation amount at the prediction point as an output from the model.

Further, one aspect of the present invention is the power generation amount prediction device, in which the explanatory variables used in machine learning the model include the weather prediction information on each of the mesh including the prediction point and the plurality of surrounding meshes, and the power generation amount, and the prediction unit, first, inputs, to the model, the weather prediction information at the prediction time on each of the mesh including the prediction point and the plurality of surrounding meshes, and an actual value of the power generation amount, and obtains the predicted value of the power generation amount at the prediction point as the output from the model, thereafter, repeats the inputting and obtaining until a predicted value at a desired time is obtained, and inputs, to the model, the weather prediction information at the prediction time on each of the mesh including the prediction point and the plurality of surrounding meshes, and the previously obtained predicted value of the power generation amount, and obtains a next predicted value of the power generation amount at the prediction point as the output from the model.

One aspect of the present invention is the power generation amount prediction device, in which the explanatory variables used in machine learning the model is array data in which the weather prediction information on each of the mesh including the prediction point and the plurality of surrounding meshes are arranged based on position information, and the prediction unit inputs, to the model, the array data in which the weather prediction information at the prediction time on each of the mesh including the prediction point and the plurality of surrounding meshes is arranged based on the position information, and obtains the predicted value of the power generation amount at the prediction point as the output from the model.

Further, one aspect of the present invention is the power generation amount prediction device, in which the explanatory variables used in machine learning the model include a time-series of the weather prediction information on each of the mesh including the prediction point and the plurality of surrounding meshes, and the prediction unit inputs, to the model, the time-series of the weather prediction information on each of the mesh including the prediction point and the plurality of surrounding meshes up to a prediction time, and obtains the predicted value of the power generation amount at the prediction point as the output from the model.

One aspect of the present invention is the power generation amount prediction device, in which the explanatory variables used in machine learning the model is array data in which the weather prediction information on each of the mesh including the prediction point and the plurality of surrounding meshes is arranged based on position information, and the prediction unit inputs, to the model, a time-series of the array data in which the weather prediction information at each prediction time on each of the mesh including the prediction point and the plurality of surrounding meshes is arranged based on the position information, and obtains the predicted value of the power generation amount at the prediction point as the output from the model.

Further, one aspect of the present invention is the power generation amount prediction device, in which the power generation amount is an amount of power generated by solar power generation, and each piece of the weather prediction information includes at least a predicted value of a solar radiation amount.

Further, one aspect of the present invention is a power generation amount prediction method including: a step of storing, by a storage unit, a model constructed by machine learning using explanatory variables including at least weather prediction information on each of a mesh including a prediction point and a plurality of surrounding meshes, and objective variables corresponding to a power generation amount from natural energy; and a step of inputting, by a prediction unit, to the model, at least weather prediction information at a prediction time on each of the mesh including the prediction point and the plurality of surrounding meshes, and obtaining a predicted value of a power generation amount at the prediction point as an output from the model.

Further, one aspect of the present invention is a program causing a computer to execute: a step of storing, by a storage unit, a model constructed by machine learning using explanatory variables including at least weather prediction information on each of a mesh including a prediction point and a plurality of surrounding meshes, and objective variables corresponding to a power generation amount from natural energy; and a step of inputting, by a prediction unit, to the model, at least weather prediction information at a prediction time on each of the mesh including the prediction point and the plurality of surrounding meshes, and obtaining a predicted value of a power generation amount at the prediction point as an output from the model.

### Advantageous Effects of Invention

According to each aspect of the above-described invention, it is possible to predict the power generation amount by adding the weather prediction information on the surrounding area to the weather prediction information on the prediction point, for at least a future period during which the weather prediction information is provided, which enables the power generation amount to be accurately predicted in the long term.

### Brief Description of Drawings

Fig. 1 is a block diagram for explaining a configuration example of a power generation amount prediction device (first to fifth embodiments) according to an embodiment of the present invention.
Fig. 2 is a flowchart illustrating an operation example (second embodiment) of the power generation amount prediction device 1 illustrated in Fig. 1.
Fig. 3 is a schematic diagram illustrating a configuration example (third embodiment) of a model 14 illustrated in Fig. 1.
Fig. 4 is a schematic diagram for explaining a model 14a illustrated in Fig. 3.
Fig. 5 is a schematic diagram illustrating another configuration example (fourth embodiment) of the model 14 illustrated in Fig. 1.
Fig. 6 is a schematic diagram illustrating still another configuration example (fifth embodiment) of the model 14 illustrated in Fig. 1.
Fig. 7 is a schematic block diagram illustrating a configuration of a computer according to at least one embodiment.

### Description of Embodiments

Hereinafter, embodiments of the present invention will be described with reference to the drawings. In each drawing, the same or corresponding components are designated by the same reference numerals or reference numerals consisting of the same numbers with different alphabetic characters at the end, and the description thereof will be omitted as appropriate.

### First Embodiment

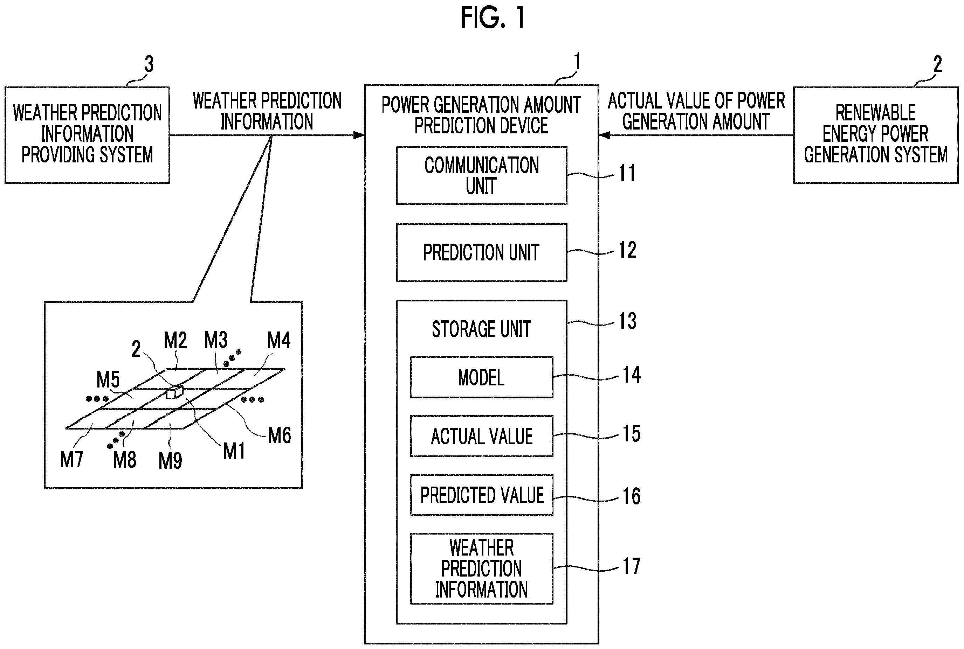

Fig. 1 is a block diagram for explaining the configuration example of a power generation amount prediction device 1 according to a first embodiment of the present invention. The basic configurations of the power generation amount prediction devices 1 are the same in the first to fifth embodiments.

The power generation amount prediction device 1 illustrated in Fig. 1 is configured by using a computer such as a server and a personal computer, and includes a communication unit 11, a prediction unit 12, and a storage unit 13, as functional elements composed of a combination of hardware included in the computer and software such as programs and data. Further, the storage unit 13 stores a model 14, an actual value 15, a predicted value 16, and weather prediction information 17.

The power generation amount prediction device 1 of the present embodiment predicts the future power generation amount (generated power amount) for each predetermined time in a renewable energy power generation system 2. The renewable energy power generation system 2 is a power generation system using natural energy such as a solar power generation system, a small hydraulic power generation system, and a wind power generation system. The power generation amount prediction device 1 receives the actual value of the power generation amount from the renewable energy power generation system 2 via a predetermined communication line at predetermined time intervals. The power generation amount prediction device 1 receives, for example, the power generation amount or average power generation value for the past one hour every hour, or receives the past power generation amount or average power generation value for a predetermined time, every time the weather prediction information providing system 3 announces new weather prediction information.

Further, the power generation amount prediction device 1 acquires the weather prediction information from the weather prediction information providing system 3 operated by the weather prediction media such as the Japan Meteorological Agency in the form of mesh data on a wide area. For example, when the renewable energy power generation system 2 is located on the mesh M1, the power generation amount prediction device 1 acquires the weather prediction information on the mesh M1, and also the weather prediction information on a plurality of surrounding meshes M2 to M9, from the weather prediction information providing system 3. Examples of the weather prediction information include predicted values of a temperature, a solar radiation amount, a rainfall amount, a snowfall amount, a wind speed, a wind direction, a humidity, a sunshine duration, and the like, for each mesh. Examples of the weather prediction information include hourly predicted values up to a few days ahead, and weather prediction information including new and updated predicted values is announced every few hours. Further, for example, the size of one mesh is 1 to 6 km square, and the power generation amount prediction device 1 acquires weather prediction information on an area of about 20 to 30 km square around the position of the renewable energy power generation system 2. However, the size of one mesh is not limited to this size.

The communication unit 11 receives data indicating the actual value of the power generation amount from the renewable energy power generation system 2, receives a file indicating the weather prediction information from the weather prediction information providing system 3, or transmits and receives predetermined information to and from the renewable energy power generation system 2, the weather prediction information providing system 3, and other systems (not illustrated).

The model 14 stored in the storage unit 13 is a prediction model in machine learning such as deep learning, and is constructed by machine learning using explanatory variables including at least weather prediction information on each of a mesh including the position (prediction point) of, for example, the renewable energy power generation system 2 and a plurality of surrounding meshes, and an objective variable corresponding to the amount of power generated by natural energy. The model 14 is constructed in advance by machine learning before performing a prediction process using the actual value of the past power generation amount and the past weather prediction information. Further, the model 14 is updated or newly constructed using new explanatory variables and objective variables as needed. The actual value 15 includes a plurality of past actual value of the power generation amount received from the renewable energy power generation system 2. The predicted value 16 includes a plurality of predicted values of the power generation amount from the renewable energy power generation system 2, predicted by the prediction unit 12. The weather prediction information 17 includes a plurality of pieces of weather prediction information acquired from the weather prediction information providing system 3.

The prediction unit 12 inputs, to the model 14, at least weather prediction information at a prediction time on each of the mesh including the prediction point and the plurality of surrounding meshes, and obtains a predicted value of a power generation amount at the prediction point as the output from the model 14.

According to the present embodiment, it is possible to predict the power generation amount by adding the weather prediction information on the surrounding area to the weather prediction information on the prediction point, for at least a future period during which the weather prediction information is provided, which enables the power generation amount to be accurately predicted in the long term.

### Second Embodiment

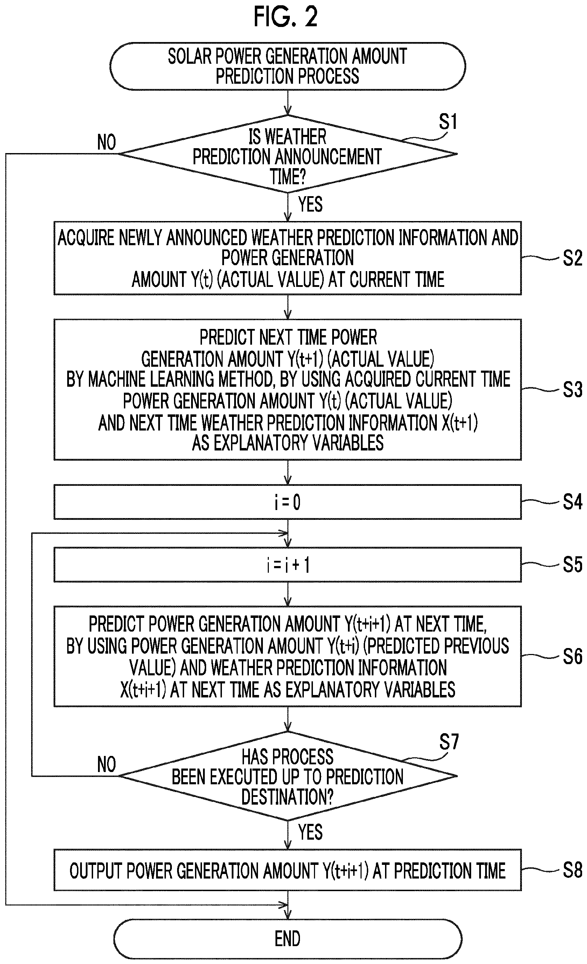

Next, a second embodiment of the present invention will be described with reference to Fig. 2. Fig. 2 is a flowchart illustrating an operation example of the power generation amount prediction device 1 illustrated in Fig. 1 as a second embodiment. In the following, the case where the renewable energy power generation system 2 is a solar power generation system will be used as an example. The process illustrated in Fig. 2 is a process for predicting the power generation amount at a certain prediction time in the future (solar power generation amount prediction process).

In the second embodiment, the explanatory variables used when machine learning the model 14 illustrated in Fig. 1 include the weather prediction information on each of the mesh including the prediction point and a plurality of surrounding meshes and the power generation amount, and the model 14 is constructed by machine learning using the explanatory variables and an objective variable corresponding to the amount of power generated by natural energy. That is, in the second embodiment, in addition to the weather prediction information, the power generation amount (actual value or predicted value) is included in the explanatory variables.

When the process illustrated in Fig. 2 is started, the prediction unit 12 illustrated in Fig. 1 determines whether or not a new weather prediction announcement time has reached (step S1). When the new weather prediction announcement time has not reached (when "NO" in step S1), the prediction unit 12 ends the process illustrated in Fig. 2. When the new weather prediction announcement time has arrived (when "YES" in step S1), the prediction unit 12 acquires the newly announced weather prediction information and the power generation amount Y(t) (actual value) at the current time (step S2). Here, the power generation amount Y(t) (actual value) at the current time is, for example, an actual value of the power generation amount for a predetermined time in the past (for example, for one hour in the past) from the current time. The power generation amount Y(t) is the actual value of the power generation amount, the power generation amount Y(t+k) is the predicted value of the power generation amount after k unit times, and for example, the power generation amount Y (t+1) is the predicted value of the power generation amount after one unit time. Here, the unit time is a time interval (for example, 1 hour) for calculating the predicted value, and can be the same as the time interval of the predicted value of the weather prediction information, for example.

Next, the prediction unit 12 predicts the next time power generation amount Y(t+1) by the machine learning method using the model 14 by using the acquired current time power generation amount Y(t) (actual value) and the next time weather prediction information X(t+1) as explanatory variables (step S3).

Next, the prediction unit 12 initializes the variable i for counting to "0" (step S4), and then increments the variable i by "1" (step S5). Next, the prediction unit 12 predicts the power generation amount Y(t+i+1) at the next time, by using the power generation amount Y(t+i) (predicted previous value) and the weather prediction information X(t+i+1) at the next time as explanatory variables (step S6). Next, the prediction unit 12 determines whether or not the process has been executed up to the prediction destination (step S7), and when the process has not been executed up to the prediction destination (when "NO" in step S7), increases the variable i by "1" (step S5), and thereafter, predicts the power generation amount Y(t+i+1) at the next time, by using the power generation amount Y(t+i) (predicted previous value) and the weather prediction information X(t+i+1) at the next time as explanatory variables (step S6).

On the other hand, when the process is executed up to the prediction destination (when "YES" in step S7), the prediction unit 12 outputs the power generation amount Y (t+i+1) at the prediction time (step S8), and ends the process illustrated in Fig. 2. Here, examples of the output in step S8 include, by the prediction unit 12, displaying the power generation amount Y(t+i+1) at the prediction time on a display unit (not illustrated) included in the power generation amount prediction device 1, or storing the power generation amount Y(t+i+1) as a predicted value 16 in the storage unit 13, or notifying a predetermined notification destination of the power generation amount Y(t+i+1) via the communication unit 11.

As described above, in the second embodiment, the power generation amount prediction device 1 acquires the weather prediction information from the weather prediction media such as the Japan Meteorological Agency in the form of mesh data on a wide area. Further, the power generation amount prediction device 1 predicts the power generation amount by using a machine learning method based on these. Weather prediction information is announced every few hours and the weather prediction information is updated. The power generation amount prediction device 1 acquires the power generation amount and the weather prediction information at each weather update time. Further, the power generation amount prediction device 1 obtains the power generation amount after the prediction interval (for example, after 1 hour) by a machine learning method based on the actual power generation amount at the current time and the weather prediction information after 1 hour. Further, the power generation amount prediction device 1 obtains the power generation amount after the next prediction interval (after 2 hours) by a machine learning method based on the previous predicted value of the power generation amount (power generation amount prediction after 1 hour) and the weather prediction information after 2 hours. Further, the power generation amount prediction device 1 recursively obtains the power generation amount in the same manner thereafter. Then, when the prediction process is completed up to the time the prediction is wanted to be performed, the power generation amount prediction device 1 outputs the power generation amount at the prediction time.

That is, in the second embodiment, in the power generation amount prediction device 1, the explanatory variables used in machine learning the model 14 include the weather prediction information on each of the mesh including the prediction point and the plurality of surrounding meshes and the power generation amount. Further, the prediction unit 12, first, inputs, to the model 14, weather prediction information at the prediction time on each of the mesh including the prediction point and the plurality of surrounding meshes, and an actual value of the power generation amount, and obtains a predicted value of the power generation amount at the prediction point as the output from the model 14, thereafter, repeats the inputting and obtaining until a predicted value at a desired time is obtained, and inputs, to the model 14, weather prediction information at the prediction time on each of the mesh including the prediction point and the plurality of surrounding meshes, and the previously obtained predicted value of the power generation amount, and obtains a next predicted value of the power generation amount at the prediction point as the output from the model 14.

According to the second embodiment, by meshing the weather prediction information over a wide area and using it as an explanatory variable, it is possible to achieve long-term prediction of the power generation amount with higher accuracy than when the weather prediction information at the local point is used. Further, according to the second embodiment, by recursively predicting the power generation amount, it is possible to achieve the long term prediction of the power generation amount with higher accuracy than when the actual data on the power generation amount and the observation data on the weather are used.

### Third Embodiment

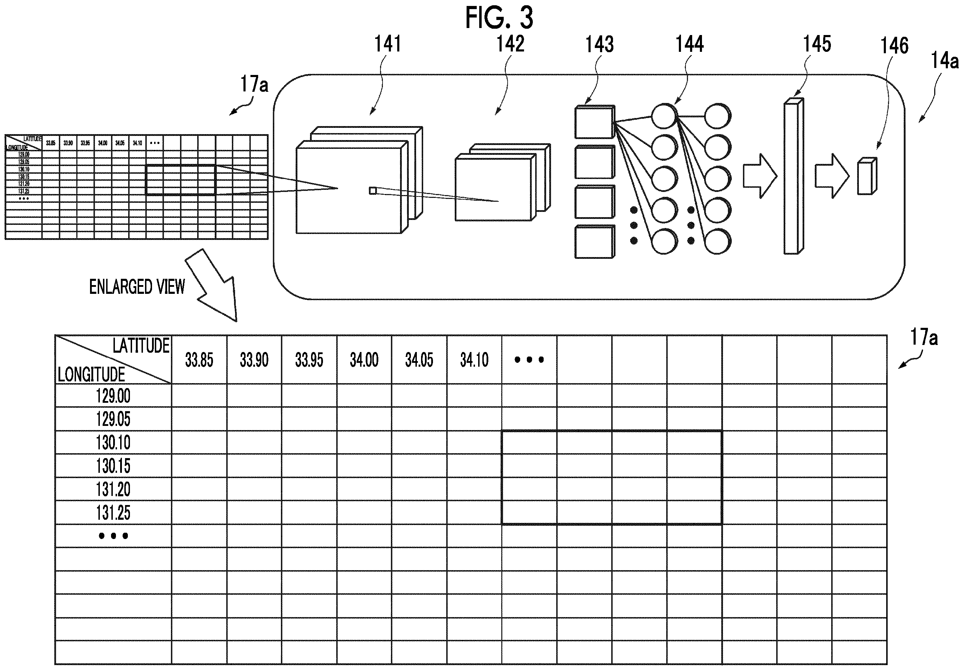

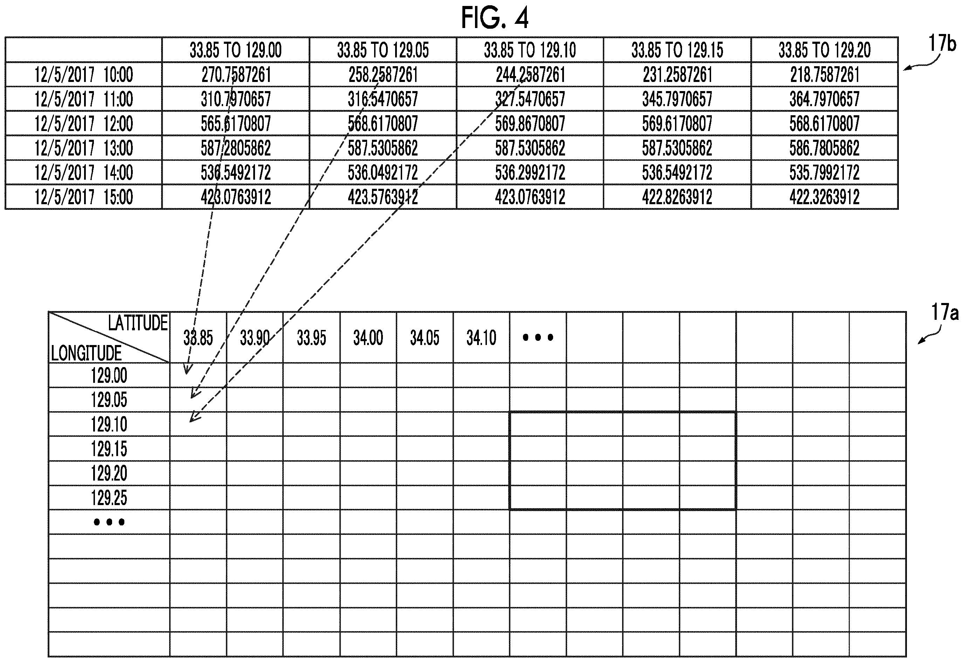

Next, a third embodiment of the present invention will be described with reference to Figs. 3 and 4. Fig. 3 is a schematic diagram illustrating a configuration example of the model 14 illustrated in Fig. 1 (illustrated as a model 14a in Fig. 3). Fig. 4 is a schematic diagram for explaining the model 14a illustrated in Fig. 3. The third embodiment is characterized by the configuration of the model 14a.

As illustrated in Fig. 3, the model 14a of the third embodiment is a model for deep learning used for image recognition such as convolutional neural network (CNN). The model 14a is a neural network having a plurality of hidden layers 141 to 144 and an output layer 145, and the hidden layers include a convolution layer 141 and a pooling layer 142.

Array data 17a is two-dimensional array data in which weather prediction information (sunshine amount, etc.) is arranged based on latitude and longitude (position information), and corresponds to the input layer of the model 14a. That is, the array data 17a is array data in which weather prediction information on each of the mesh including the prediction point and the plurality of surrounding meshes is arranged based on the latitude and longitude (position information), and is explanatory variables used in machine learning the model 14a. The weather prediction information has a form of time-series data for each latitude and longitude, as indicated as weather prediction information 17b in Fig. 4, for example, but by replacing the weather prediction information with the array data 17a based on latitude and longitude, the weather distribution information can be characterized in the input data (array data 17a). The weather prediction information 17b indicates that the predicted value of the solar radiation amount of the mesh corresponding to, for example, 33.85 degrees north latitude and 129.00 degrees east longitude at 10:00 on December 5, 2017 is 270.75877261 (kW/m²).

Further, the output layer 145 corresponds to the classification of the feature amount corresponding to the power generation amount for each of a plurality of ranges. From the output layer 145, the predicted value 146 of the power generation amount corresponding to the input array data 17a is output.

In the third embodiment, the model 14a (corresponding to the model 14 in Fig. 1) is a neural network having a plurality of hidden layers and the hidden layers include a convolution layer and a pooling layer. Further, the explanatory variables used in machine learning the model 14a is array data in which the weather prediction information on each of the mesh including the prediction point and the plurality of surrounding meshes are arranged based on position information. Further, the prediction unit 12 inputs, to the model 14a, array data in which the weather prediction information on each of the mesh including the prediction point and the plurality of surrounding meshes at the prediction time are arranged based on position information, and obtains a predicted value of the power generation amount at the prediction point as an output from the model 14a.

As described above, in the third embodiment, the power generation amount prediction device 1 extracts an effective feature amount from the positional relationship and distribution of the mesh-shaped weather prediction information over a wide area by using the deep learning technique used for image recognition, and predicts the power generation amount. The weather prediction information has a form of time-series data for each latitude and longitude, but by replacing the weather prediction information with the array based on latitude and longitude, the weather distribution information can be characterized in the input data. That is, by using the information obtained by arranging the mesh-shaped weather prediction information based on coordinates (latitude/longitude) as explanatory variables, the distribution of weather prediction information is treated like image information, and the positional relationship and distribution of the weather, which is effective for predicting the power generation amount, can be automatically acquired as feature amounts, which improves the accuracy of power generation amount prediction.

### Fourth Embodiment

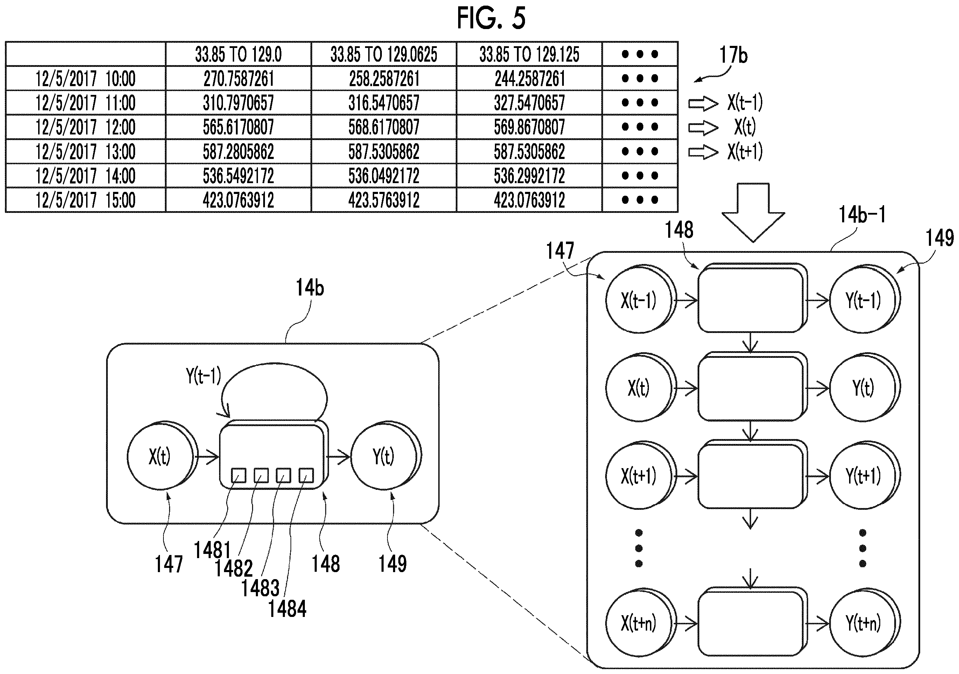

Next, a fourth embodiment of the present invention will be described with reference to Fig. 5. Fig. 5 is a schematic diagram illustrating a configuration example of the model 14 illustrated in Fig. 1 (illustrated as a model 14b or 14b-1 in Fig. 5). The fourth embodiment is characterized by the configuration of model 14b or 14b-1.

As illustrated in Fig. 5, the model 14b of the fourth embodiment is a model for deep learning that handles time-series data such as long short-term memory (LSTM). The model 14b is a neural network composed of a block 148 in which the hidden layers include a memory cell 1481, an input gate 1482, an oblivion gate 1483, and an output gate 1484, and which recursively inputs an output. The model 14b-1 is the same model as the model 14b, and is a model in which the shape of the recursive input of the model 14b is expanded. The input layer 147 of the model 14b is a multidimensional weather prediction information X(t-1), X(t), X(t+1), ... consisting of data on the sunshine amount at a plurality of points per hour of the weather prediction information 17b. The output layer 148 of the model 14b is power generation amounts Y(t-1), Y(t), Y(t+1), ..., which is a time-series of predicted values (or actual values) of the power generation amount.

In the fourth embodiment, the model 14b (corresponding to the model 14 in Fig. 1) is a neural network composed of a block 148 in which hidden layers include a memory cell 1481 and which recursively inputs an output. Further, the explanatory variables used in machine learning the model 14b include a time-series of the weather prediction information on each of the mesh including the prediction point and the plurality of surrounding meshes. Further, the prediction unit 12 inputs, to the model 14b, the time-series of the weather prediction information on each of the mesh including the prediction point and the plurality of surrounding meshes, and obtains a predicted value of the power generation amount at the prediction point as an output from the model 14b.

As described above, in the fourth embodiment, the power generation amount prediction device 1 extracts an effective feature amount such as a change in the weather with time from the long-time weather prediction information, by using the deep learning technique used for the time-series prediction, and predicts the power generation amount. According to the fourth embodiment, by using the time-series deep learning, with the long-time weather time-series information as an explanatory variable, it is possible to automatically acquire the transition of the predicted value of weather in the time-series as a feature amount, and achieve the accurate prediction of the power generation amount.

### Fifth Embodiment

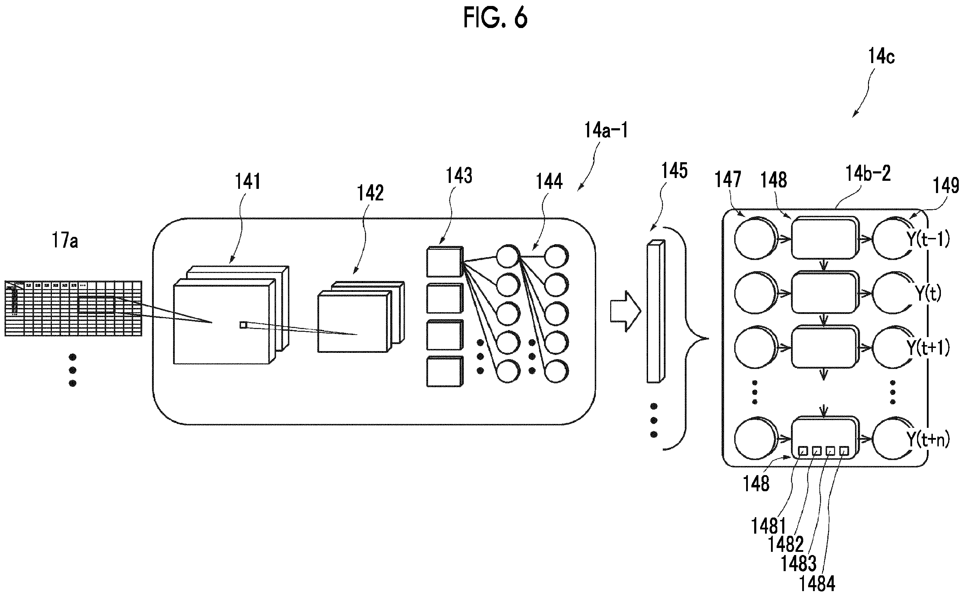

Next, a fifth embodiment of the present invention will be described with reference to Fig. 6. Fig. 6 is a schematic diagram illustrating a configuration example of the model 14 illustrated in Fig. 1 (illustrated as a model 14c in Fig. 6). The fifth embodiment is characterized by the configuration of the model 14c.

In the fifth embodiment, the model 14c includes a first neural network 14a-1 having a plurality of hidden layers 141 to 144, the hidden layers including a convolution layer 141 and a pooling layer 142, and a second neural network 14b-2 composed of a block 148 in which the hidden layers include a memory cell 1481, an input gate 1482, an oblivion gate 1483, and an output gate 1484, and which recursively inputs an output. Further, the explanatory variables used in machine learning the model 14c is array data 17a in which the weather prediction information on each of the mesh including the prediction point and the plurality of surrounding meshes are arranged based on position information. Further, the prediction unit 12 inputs, to the first neural network 14a-1, a time-series of the array data 17a (three-dimensional array data representing two-dimensional array data in time series) in which the weather prediction information at each prediction time on each of the mesh including the prediction point and the plurality of surrounding meshes is arranged based on position information, inputs the time-series of the output (output layer 145) from the first neural network 14a-1, to the second neural network 14b-2, and obtains a predicted value of the power generation amount at the prediction point as the output from the second neural network 14b-2. Here, the first neural network 14a-1 corresponds to the model 14a of the third embodiment. Further, the second neural network 14b-2 corresponds to the model 14b used in the fourth embodiment.

In the fifth embodiment, the model 14a used in the third embodiment and the model 14b used in the fourth embodiment are used in combination. That is, wide-area weather mesh prediction information is acquired for a long time, quantified by using image recognition deep learning, and further quantified by using deep learning used for time-series prediction, thereby predicting the power generation amount. According to the fifth embodiment, by using the mesh-shaped whether time-series information as an explanatory variable, it is possible to automatically acquire weather position information and time-series transitions as feature amounts, and achieve the accurate prediction of the power generation amount.

As described above, according to each embodiment of the present invention, it is possible to automatically acquire the feature amount for the power generation amount prediction and achieve the accurate prediction of the power generation amount.

Although the embodiments of the present invention have been described above with reference to the drawings, the specific configuration is not limited to the above embodiments, and design changes and the like within a range not deviating from the gist of the present invention are also included.

### Computer Configuration

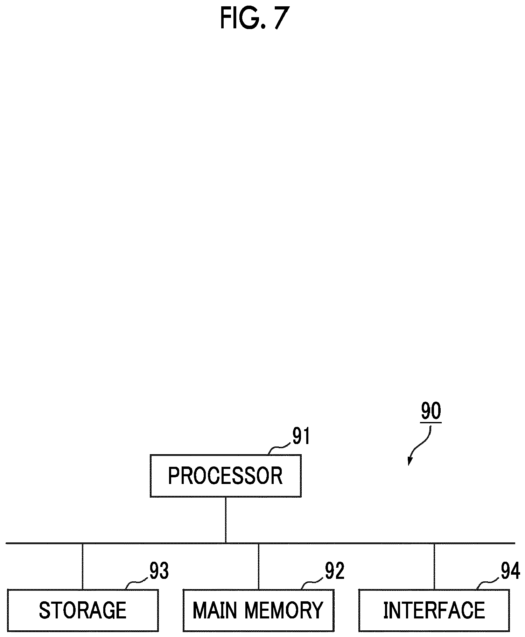

Fig. 7 is a schematic block diagram illustrating a configuration of a computer according to at least one embodiment.

A computer 90 includes a processor 91, a main memory 92, a storage 93, and an interface 94.

The above-described power generation amount prediction device 1 is mounted on the computer 90. The operation of each processing unit described above is stored in the storage 93 in the form of a program. The processor 91 reads a program from the storage 93, expands the read program into the main memory 92, and executes the above process according to the program. Further, the processor 91 secures a storage area corresponding to each of the above-described storage units in the main memory 92, according to the program.

The program may be for achieving a part of the functions exerted by the computer 90. For example, the program may exert its function in combination with another program already stored in the storage or in combination with another program mounted on another device. In another embodiment, the computer may include a custom large scale integrated circuit (LSI) such as a programmable logic device (PLD) in addition to or in place of the above configuration. Examples of PLDs include a programmable array logic (PAL), a generic array logic (GAL), a complex programmable logic device (CPLD), and a field programmable gate array (FPGA). In this case, some or all of the functions achieved by the processor may be achieved by the integrated circuit.

Examples of the auxiliary storage device 93 include a hard disk drive (HDD), a solid state drive (SSD), a magnetic disk, a magneto-optical disk, a compact disc read only memory (CD-ROM), a digital versatile disc read only memory (DVD-ROM), and a semiconductor memory. The auxiliary storage device 93 may be an internal medium directly connected to the bus of the computer 90, or may be an external medium connected to the computer 90 through the interface 94 or a communication line. Further, when this program is delivered to the computer 90 through a communication line, the computer 90 receiving the delivered program may develop the program in the main memory 92 and execute the above process. In at least one embodiment, the storage 93 is a non-transitory tangible storage medium.

### Industrial Applicability

According to each aspect of the above-described invention, it is possible to predict the power generation amount by adding the weather prediction information on the surrounding area to the weather prediction information on the prediction point, for at least a future period during which the weather prediction information is provided, which enables the power generation amount to be accurately predicted in the long term.

### Reference Signs List

- 1: Power generation amount prediction device
- 2: Renewable energy power generation system
- 3: Weather prediction information providing system
- 12: Prediction unit
- 13: Storage unit
- 14, 14a, 14b, 14b-1, 14c: Model

## Claims

1. A power generation amount prediction device comprising:
a storage unit that stores a model constructed by machine learning using explanatory variables including at least weather prediction information on each of a mesh including a prediction point and a plurality of surrounding meshes, and objective variables corresponding to a power generation amount from natural energy; and
a prediction unit that inputs, to the model, at least weather prediction information at a prediction time on each of the mesh including the prediction point and the plurality of surrounding meshes, and obtains a predicted value of a power generation amount at the prediction point as an output from the model.

2. The power generation amount prediction device according to claim 1, wherein
the explanatory variables used in machine learning the model include the weather prediction information on each of the mesh including the prediction point and the plurality of surrounding meshes, and the power generation amount, and
the prediction unit
first, inputs, to the model, the weather prediction information at the prediction time on each of the mesh including the prediction point and the plurality of surrounding meshes, and an actual value of the power generation amount, and obtains the predicted value of the power generation amount at the prediction point as the output from the model,
thereafter, repeats the inputting and obtaining until a predicted value at a desired time is obtained, and
inputs, to the model, the weather prediction information at the prediction time on each of the mesh including the prediction point and the plurality of surrounding meshes, and the previously obtained predicted value of the power generation amount, and obtains a next predicted value of the power generation amount at the prediction point as the output from the model.

3. The power generation amount prediction device according to claim 1, wherein
the explanatory variables used in machine learning the model is array data in which the weather prediction information on each of the mesh including the prediction point and the plurality of surrounding meshes are arranged based on position information, and
the prediction unit inputs, to the model, the array data in which the weather prediction information at the prediction time on each of the mesh including the prediction point and the plurality of surrounding meshes is arranged based on the position information, and obtains the predicted value of the power generation amount at the prediction point as the output from the model.

4. The power generation amount prediction device according to claim 1, wherein
the explanatory variables used in machine learning the model include a time-series of the weather prediction information on each of the mesh including the prediction point and the plurality of surrounding meshes, and
the prediction unit inputs, to the model, the time-series of the weather prediction information on each of the mesh including the prediction point and the plurality of surrounding meshes up to a prediction time, and obtains the predicted value of the power generation amount at the prediction point as the output from the model.

5. The power generation amount prediction device according to claim 1, wherein
the explanatory variables used in machine learning the model is array data in which the weather prediction information on each of the mesh including the prediction point and the plurality of surrounding meshes is arranged based on position information, and
the prediction unit inputs, to the model, a time-series of the array data in which the weather prediction information at the prediction time on each of the mesh including the prediction point and the plurality of surrounding meshes is arranged based on the position information, and obtains the predicted value of the power generation amount at the prediction point as the output from the model.

6. The power generation amount prediction device according to any one of claims 1 to 5, wherein
the power generation amount is an amount of power generated by solar power generation, and
each piece of the weather prediction information includes at least a predicted value of a solar radiation amount.

7. A power generation amount prediction method comprising:
a step of storing, by a storage unit, a model constructed by machine learning using explanatory variables including at least weather prediction information on each of a mesh including a prediction point and a plurality of surrounding meshes, and objective variables corresponding to a power generation amount from natural energy; and
a step of inputting, by a prediction unit, to the model, at least weather prediction information at a prediction time on each of the mesh including the prediction point and the plurality of surrounding meshes, and obtaining a predicted value of a power generation amount at the prediction point as an output from the model.

8. A program causing a computer to execute:
a step of storing, by a storage unit, a model constructed by machine learning using explanatory variables including at least weather prediction information on each of a mesh including a prediction point and a plurality of surrounding meshes, and objective variables corresponding to a power generation amount from natural energy; and
a step of inputting, by a prediction unit, to the model, at least weather prediction information at a prediction time on each of the mesh including the prediction point and the plurality of surrounding meshes, and obtains a predicted value of a power generation amount at the prediction point as an output from the model.
